Europäisches Patentamt

**European Patent Office**

**Office européen des brevets**

(11) Numéro de publication : **0 190 068**
**B1**

(12) **FASCICULE DE BREVET EUROPÉEN**

(45) Date de publication du fascicule du brevet :
30.09.87

(51) Int. Cl.⁴ : **C 08 G 14/06, C 08 L 61/34, C 09 J 3/16**

(21) Numéro de dépôt : **86400071.6**

(22) Date de dépôt : **15.01.86**

(54) **Procédé de fabrication de colles à bois.**

(30) Priorité : **30.01.85 FR 8501277**

(43) Date de publication de la demande :
**06.08.86 Bulletin 86/32**

(45) Mention de la délivrance du brevet :
**30.09.87 Bulletin 87/40**

(84) Etats contractants désignés :
**AT BE CH DE GB IT LI NL SE**

(56) Documents cités :
**EP-A- 0 152 318**
**CH-A- 445 859**
**FR-A- 2 092 232**

(73) Titulaire : **Société Chimique des Charbonnages S.A.**
**Tour Aurore Place des Reflets**
**F-92080 Paris La Défense 2 Cédex 5 (FR)**

(72) Inventeur : **Boucheron, Bernard**
**16, rue des Vergers**
**F-57110 Yutz (FR)**
Inventeur : **Greff, Marcel**
**Zerwastrasse 3**
**D-6643 Perl Tettinger (DE)**

(74) Mandataire : **Rieux, Michel**
**C d F Chimie S.A. Service Propriété Industrielle Tour**
**Aurore Place des Reflets Cédex no. 5**
**F-92080 Paris la Défense 2 (FR)**

# 0 190 068

**Description**

La présente invention concerne un procédé de préparation de liants aminoplastes. Elle a plus particulièrement pour objet un procédé de fabrication de colles à bois produisant de faibles émanations de formol et qui conduisent à des collages résistants à l'eau et aux intempéries.

La majorité des colles utilisées dans l'industrie du bois, sont à base de résine urée-formol qui sont connues comme peu résistantes à l'humidité. Les résines phénoliques si elles conviennent pour la réalisation de collage résistants aux intempéries, fournissent des collages colorés et produisent des dégâts dans le bois au moment du pressage. Par ailleurs, ces résines sont connues pour être peu réactives, ce qui ne permet d'obtenir que de faibles cadences de fabrication lors de leur utilisation dans l'industrie du bois. De plus, l'utilisation optimale de ces résines phénoliques nécessite d'augmenter leur alcalinité, par l'addition de durcisseurs eux-mêmes alcalins : une telle alcalinité provoque des efflorescences à la surface des matériaux fabriqués.

Afin d'obtenir des résines qui permettent d'obtenir des collages présentant en particulier une bonne résistance à l'humidité et aux intempéries, on a proposé des recettes particulières de fabrication de résines qui contiennent de l'urée, de la mélamine, du formol et du phénol. A cet effet, on a proposé de condenser la mélamine et/ou l'urée avec du formol en solution aqueuse puis de faire réagir le condensat obtenu avec du phénol avec le cas échéant, de la mélamine et du formol, cette dernière condensation étant réalisée à pH compris entre 7,5 et 10. Les résines obtenues en mettant en œuvre un tel procédé, permettent d'obtenir des collages acceptables en ce qui concerne la résistance aux intempéries mais contiennent encore des quantités trop élevées de formol libre et de phénol libre.

La présence de formol libre dans ces colles présente l'inconvénient de dégager d'importantes quantités de formol gazeux au moment de la fabrication des panneaux, une partie de ce formol se retrouvant ensuite dans les panneaux finis. De même la présence de phénol libre dans les colles est aussi préjudiciable à l'atmosphère des ateliers dans lesquels ces colles sont mises en œuvre. De plus la présence du phénol dans ces colles est à la source d'un problème de pollution pour ce qui concerne le traitement des eaux usées lorsqu'on sait que l'on traite ces eaux usées phénolées dans des stations d'épuration, le phénol détruit les microorganismes indispensables au bon fonctionnement de ces stations.

Le besoin se fait donc sentir de mettre au point des qualités de colles capables non seulement de fournir des collages présentant de bonnes caractéristiques mécaniques et ainsi qu'une bonne résistance aux intempéries et au vieillissement, mais aussi des qualités qui présentent de faibles teneurs en formol libre et en phénol libre.

La présente invention concerne un procédé de fabrication de liants aminoplastes comprenant de l'urée, de la mélamine, du formol et du phénol et qui fournit des collages présentant de bonnes caractéristiques mécaniques et un bon comportement au vieillissement et aux intempéries.

La présente invention concerne un procédé de fabrication de liants aminoplastes contenant pour une mole d'urée, 0,2 à 0,8 mole de mélamine, 1,5 à 2,5 mole de formaldéhyde, 0,05 à 0,5 mole de phénol, caractérisé en ce qu'on condense dans une première étape un précondensat d'urée et de formaldéhyde de rapport molaire F/U compris entre 3 et 6 en présence d'urée de manière que le rapport molaire F/U soit compris à cette première étape entre 1,8 et 3, la condensation étant conduite à une température comprise entre 40 à 100 °C, d'abord à pH neutre puis à pH acide au plus égal à 5,5 et en ce que dans une deuxième étape on ajoute la totalité du phénol et le restant de l'urée, la condensation étant conduite toujours à pH acide au plus égal à 5,5 à une température comprise entre 40 et 100 °C jusqu'à ce que la viscosité du mélange réactionnel soit comprise entre 200 et 1 200 mPa·s à 20 °C pour une teneur en extrait sec de 52 % et en ce que dans une troisième étape, on ajoute après neutralisation à pH égal au moins à 8, toute la mélamine, le milieu réactionnel étant chauffé entre 40 et 100 °C jusqu'à ce que la viscosité du mélange réactionnel soit comprise entre 200 et 1 500 m Pa·s pour un extrait sec de 60 % à 20 °C.

Selon une autre caractéristique du procédé de l'invention il est possible dans la première étape de mettre en œuvre une solution aqueuse de formaldéhyde au lieu d'un précondensat d'urée et de formaldéhyde. Dans ce cas les solutions aqueuses de formaldéhyde utilisées ont des concentrations comprises entre 30 et 75 % et de préférence entre 40 et 60 %. Toutes les étapes du procédé sont conduites de la même façon que lorsqu'on met en œuvre un précondensat d'urée et de formol. Seule la troisième étape est éventuellement achevée par la mise en œuvre d'une opération de concentration de la solution obtenue sous pression réduite.

On a trouvé qu'en opérant dans ces conditions on obtient des résines qui présentent de bonnes caractéristiques techniques, ainsi qu'une teneur réduite en formol libre et en phénol libre.

Le procédé de la présente demande consiste à condenser dans une première étape un précondensat d'urée et de formaldéhyde de rapport molaire F/U compris entre 3 et 6 et de préférence entre 4 et 5 ou une solution aqueuse de formaldéhyde de concentration comprise entre 30 et 75 % et de préférence entre 40 et 60 % avec de l'urée de manière que le rapport molaire F/U à cette étape soit compris entre 1,8 et 3,0 et de préférence entre 2,0 et 2,3. Les précondensats d'urée et de formaldéhyde sont des produits connus préparés par réaction d'urée et de formol de rapport molaire compris entre 3 et 6. Comme précondensats, on peut citer par exemple, les produits vendus sous la marque « SARUFORM® 80 ». Cette première étape

2

est conduite d'abord à pH neutre, puis à pH acide au plus égal à 5,5 : l'acidification est obtenue par addition par exemple d'une solution diluée d'acide formique.

La deuxième étape du procédé objet de l'invention consiste à ajouter la totalité du phénol et le restant de l'urée, la condensation étant conduite toujours à pH acide au plus égal à 5,5 à une température comprise entre 40 et 100 °C jusqu'à ce que la viscosité du milieu réactionnel soit comprise entre 200 et 1 200 m Pa · s à 20 °C pour un extrait sec de 52 %. L'extrait sec étant défini comme étant le pourcentage de produit obtenu après avoir séché un gramme du mélange réactionnel pendant 2 heures à 120 °C, dans une étuve pourvue d'une ventilation naturelle.

La troisième étape du procédé objet de l'invention, consiste à ajouter après neutralisation à pH au moins égal à 8, toute la mélamine, le milieu réactionnel étant chauffé entre 40 et 100 °C, jusqu'à ce que la viscosité du milieu réactionnel soit comprise entre 200 et 1 500 m Pa · s et de préférence entre 300 et 800 m Pa · s pour un extrait sec de 60 % à 20 °C. La neutralisation et le maintien à pH basique du milieu réactionnel sont obtenus par addition par exemple d'une solution de soude.

Les résines selon l'invention possèdent de très bonnes propriétés, en particulier présentent des quantités de formol libre et de phénol libre faibles, leur tenue à la température ordinaire est normale : à 20 °C ces mélanges commencent à gélifier seulement au bout de plus de trois mois. Ces résines peuvent être traitées de manière courante, comme les autres résines non modifiées. On peut y ajouter des modificateurs connus tels que les produits hydrofugeants ou fongicides. Les résines préparées selon le procédé de l'invention sont durcies en mettant en œuvre des techniques usuelles de collages et d'agglomération du bois, c'est-à-dire, par effet catalytique de catalyseurs connus par exemple : chlorure ou sulfate d'ammonium, sous l'action de la chaleur.

Les exemples suivants illustrent la présente invention. Dans les exemples, les quantités sont exprimées en partie en poids. La réactivité des résines est déterminée selon une méthode dite « du bécher » qui consiste à ajouter à 50 g de résine, 5 g d'une solution de chlorure d'ammonium à 10 % : le mélange est placé dans un bécher de 100 ml de forme haute. On plonge le bécher dans un bain d'eau bouillante tout en agitant le mélange et on mesure le temps écoulé jusqu'à gélification du mélange.

## Exemple 1

Dans un réacteur, on charge :
26,42 parties d'un précondensat d'urée et de formol titrant 56,09 % de formol et 22,97 % d'urée,
6,81 parties d'urée.
3,70 parties d'eau.
Le rapport molaire F/U étant de 2,3.
On chauffe le milieu réactionnel à 100 °C et on laisse à cette température pendant 5 minutes. Le pH du milieu réactionnel qui est alors de 6,2 est abaissé à 4,8 par addition de 0,04 partie d'une solution diluée à 36 % d'acide formique. La température du milieu réactionnel est maintenu à 98 °C pendant 15 minutes.
On ajoute ensuite :
2,27 parties de phénol
1,61 partie d'urée
9,87 parties d'eau.
On chauffe le milieu réactionnel à une température de 92 °C, le pH du mélange est alors de 4,7. On maintient le milieu réactionnel à cette température jusqu'à ce que la viscosité du milieu réactionnel soit de 500 m Pa · s à 20 °C ce qui nécessite une durée de 25 minutes.
On neutralise ensuite le milieu réactionnel par addition de 0,09 partie d'une solution de soude à 50 % : le pH monte à une valeur égale à 8,5. On ajoute ensuite 14,3 parties de mélamine ce qui produit un abaissement de la température du milieu réactionnel que l'on réchauffe pour atteindre une température de 95 °C. On ajoute à nouveau 0,05 partie d'une solution de soude à 50 % : le pH du milieu réactionnel s'élève à 9,5. On chauffe ensuite pendant 40 minutes : on obtient alors une résine qui présente les caractéristiques suivantes :
Extrait sec : 61,79 %
pH : 8,7
Viscosité : 450 m Pa · s à 20 °C.
Formol libre % : 0,81
Phénol libre % : 1,06
Réactivité au bécher : 151 secondes.

## Exemple 2

L'exemple 1 est répété en utilisant 5 233,5 parties d'un précondensat d'urée et de formol titrant 56,63 % de formol et 22,23 % d'urée
740 parties d'eau
1 410,6 parties d'urée en perles
On chauffe le milieu réactionnel à 100 °C et on laisse à cette température pendant 5 minutes. Le pH qui est alors de 6,5 est abaissé à 5,5 par addition de 2,44 parties d'une solution d'acide formique à 85 %.

**0 190 068**

La température du milieu réactionnel est maintenue à 98 °C pendant 15 minutes jusqu'à ce que la viscosité à 20 °C soit 500 m Pa · s.

On ajoute ensuite :

455 parties de phénol

325 parties d'urée

1 976 parties d'eau.

On· chauffe le milieu réactionnel pendant 1 heure à 90 °C, le pH est alors de 5,5.

On neutralise le milieu réactionnel en ajoutant 15 parties d'une solution de soude à 50 % : le pH s'élève à 8. On ajoute ensuite 2 860 parties de mélamine et on poursuit la condensation en maintenant le pH à 9,2 par addition de 25,8 parties d'une solution de soude à 50 %. La condensation est poursuivie jusqu'à ce que la viscosité du milieu réactionnel soit de 400 m Pa · s à 20 °C.

Après refroidissement la résine obtenue présente les caractéristiques suivantes :

Extrait sec : 61,67 %

pH : 8,5

Viscosité : 375 m Pa · s

Formol libre : 0,23

Phénol libre : 1,61

Réactivité au bécher : 153 secondes.

Exemple 3 (Comparatif)

On prépare un produit adhésif de façon connue en partant de :

1 361,32 parties d'une résine fraîchement préparée de rapport molaire formaldéhyde/urée : 1,8 et d'extrait sec 65,3 %.

On ajoute ensuite 361,60 parties de mélamine, 647,48 parties de formol à 40 % et 136,43 parties de phénol à 95 %. On porte le mélange à 95-98 °C et on condense à cette température, en maintenant le pH à 8,4-8,6 par addition de 11,5 parties de soude à 25 % pendant 70 minutes et on refroidit lorsque la viscosité du mélange atteint 560 m Pa · s. On réajuste alors le pH à 9,0 en ajoutant 4 parties de soude à 25 %.

La résine obtenue présente les caractéristiques suivantes :

Extrait sec (%) : 63,76

pH : 8,5

Viscosité à 20 °C : 675 m Pa · s

Réactivité selon la méthode du bécher : 2 minutes 2 secondes

Formaldéhyde libre (%) : 1,20

Phénol libre (%) : 1,49

Exemple 4 (Comparatif)

On prépare une résine selon un procédé connu.

L'exemple 3 est répété mais en supprimant l'addition de formol.

On met en œuvre :

1 771,75 parties d'une résine de rapport molaire F/U = 1,8

171,9 parties de phénol à 95 %

456,25 parties de mélamine

100 parties d'eau

La résine obtenue présente les caractéristiques suivantes :

Extrait sec % : 66,75

pH : 8,5

Viscosité à 20 °C : 640 m Pa · s

Réactivité selon la méthode du bécher : 3 minutes 4 secondes

Formol libre (%) : 0,65

Phénol libre (%) : 2,68

Exemple 5

L'exemple 1 est répété en mettant en œuvre

1 096,15 parties d'une solution aqueuse de formaldéhyde à 52 %. On élève le pH de cette solution de 3 à 9 par addition de 1,3 partie de soude à 24 %,

518,25 parties d'urée

0,1 partie d'eau.

On porte le milieu réactionnel à 100 °C et le pH est abaissé de 6,5 à 5,1 par addition de 0,85 partie d'acide formique à 36 %.

On maintient ces conditions opératoires pendant 40 minutes.

On ajoute ensuite :

39,25 parties d'urée

4

# 0 190 068

204,15 parties d'eau
92,10 parties de phénol à 95 %

On chauffe le milieu réactionnel à 95 °C jusqu'à la viscosité du milieu réactionnel atteigne 525 m Pa · s ce qui nécessite une durée de 25 minutes. Le milieu réactionnel est ensuite élevé à un pH de 8,5 par addition de 5,1 parties de soude à 24 %, puis on ajoute 550 parties de mélamine. On chauffe ensuite le milieu réactionnel à 95 °C, en le maintenant à pH égal à 8,5 par addition de 2,5 parties de soude à 24 % jusqu'à ce que la viscosité atteigne 180 m Pa · s à 40 °C, ce qui nécessite une durée de 60 minutes.

On obtient une résine qui présente les caractéristiques suivantes :
Extrait sec : 62,15 %
pH : 8,5
Viscosité : 580 m Pa · s à 20 °C
Formol libre : 0,39 %
Phénol libre : 0,90 %
Réactivité au bécher : 2 minutes 37 secondes.

## Exemple 6

L'exemple 2 est répété en utilisant :
1 000,18 parties d'un précondensat d'urée et de formol titrant 56,99 % de formol et 23,02 d'urée
265,26 parties d'urée
155,31 parties d'eau

Le mélange réactionnel est chauffé à 100 °C et on le maintient à cette température pendant 5 minutes. Le pH qui est alors de 6,4 est abaissé à 5,1 par addition de 1,55 partie d'acide formique à 18 %. On maintient le milieu réactionnel à 100 °C jusqu'à ce que la viscosité atteigne 280 m Pa · s à 40 °C.

On ajoute ensuite :
184,21 parties de phénol à 95 %
370,55 parties d'eau
62 parties d'urée granulée.

On chauffe le milieu réactionnel à 90 °C jusqu'à ce que la viscosité atteigne 160 m Pa · s à 40 °C, ce qui nécessite une durée de 25 minutes.

On neutralise le milieu réactionnel en ajoutant 5,1 parties de soude à 24 % : le pH s'élève à 8,3. On ajoute ensuite 462,5 parties de mélamine et on poursuit la condensation en maintenant le pH à 8,5 par addition de 2,5 parties de soude à 24 %. On poursuit la condensation jusqu'à ce que la viscosité du milieu réactionnel soit de 190 m Pa · s à 40 °C.

Après refroidissement, on obtient une résine qui présente les caractéristiques suivantes :
Extrait sec : 62,13 %
pH : 8,5
Viscosité : 470 m Pa · s
Formol libre : 0,69 %
Phénol libre : 2,07 %
Réactivité au bécher : 133 secondes.

## Exemple 7

L'exemple 6 est répété, mais en ajoutant après l'étape de condensation acide :
263,16 parties de phénol à 95 %
366,59 parties d'eau
62 parties d'urée granulée
et 387,5 parties de mélamine que l'on ajoute après neutralisation à pH 8,3 du milieu réactionnel.

La résine obtenue présente les caractéristiques suivantes :
Extrait sec : 61,56 %
pH : 8,5 %
Viscosité : 435 m Pa · s
Formol libre : 0,67 %
Phénol libre : 2,25 %
Réactivité au bécher : 137 secondes.

## Exemple 8

Les liants fabriqués aux exemples indiqués ont été utilisés pour fabriquer des panneaux de copeaux de bois à l'aide d'une presse sous une pression moyenne de 2 à 3 m Pa et à une température de 180 °C pendant 5 minutes.

Les tableaux annexés indiquent les caractéristiques des produits obtenus.

Les mesures ont été déterminées selon les normes suivantes :

Teneur en formol (perforateur) : Norme EN 120

5

Epaisseur, masse volumique et humidité : Norme DIN 52361
Traction VlOO : Norme DIN 68763
Gonflement (%) : Norme DIN 52364
Dans les tableaux :
C.E. signifie couche extérieure
C.I. signifie couche intérieure
Les temps de gel sont déterminés en soumettant environ 3,5 g de mélange collant dans un tube à essai porté à une température de 100 °C.
L'épreuve de vieillissement accéléré par la méthode dite V313 est réalisée selon la norme NFB 51263.

| RESINE UTILISEE | Résine de l'exemple 2 | Résine de l'exemple 3 Comparatif | Résine de l'exemple 4 Comparatif |
|---|---|---|---|
| Type Panneau | Multicouche | Multicouche | Multicouche |
| .Taux encollage (CE, CI) | 14-13 | 14-13 | 14-13 |
| .Temps de gel des mélanges collants (CE, CI secondes) | 112-82 | 102,5-54 | 163-102 |
| .Perforateur Teneur en formol (mg/hg) | 16,5 | 67,1 | 30,0 |
| .Epaisseur (mm) | 18,56 | 18,46 | 18,56 |
| .Masse volumique (kg/m3) | 694 | 695 | 679 |
| .Traction transversale (MPa) - V 100 | 0,37 | 0,38 | 0,36 |
| .Gonflement (%) | | | |
| 2 heures | 3,9 | 4,5 | 4,3 |
| 24 heures | 8,6 | 9,6 | 9,5 |
| . Humidité (%) bois/sec | 7,7 | 7,8 | 7,5 |
| .Epreuve de vieillissement accéléré-par la méthode dite V313 : | | | |
| -fraction transversale V313 (MPa) | 0,63 | * | * |
| -Variation d'épaisseur(0/0) | 7,6 | * | * |

* pas encore déterminé au moment du dépôt de la demande de brevet

**0 190 068**

| RESINE UTILISEE | Résine de l'exemple 5 | Résine de l'exemple 6 | Résine de l'exemple 7 |
|---|---|---|---|
| Type Panneau | Multicouche | Multicouche | Multicouche |
| Taux encollage (CE, CI) | 14-13 | 14-13 | 14-13 |
| collants (CE,CI/secondes ) | 90-70 | 88-65 | 92-68 |
| Perforateur | | | |
| Teneur en formol (mg/hg) | 13,9 | 27,7 | 36,5 |
| Epaisseur (mm) | 18,66 | 18,61 | 18,68 |
| Masse volumique (kg/m3) | 688 | 698 | 697 |
| Traction transversale | | | |
| (Mpa) - V 100 | 0,39 | 0,38 | 0,33 |
| Gonflement (%) | | | |
| 2 heures | 4,7 | 2,7 | 3 |
| 24 heures | 9,1 | 7,8 | 8 |
| Humidité (%) bois sec | 7,9 | 9 | 9,1 |

## Revendications

1. Procédé de fabrication de liants aminoplastes contenant pour une mole d'urée, 0,2 à 0,8 mole de mélamine, 1,5 à 2,5 mole de formaldéhyde, 0,05 à 0,5 mole de phénol, caractérisé en ce qu'on condense dans une première étape un précondensat d'urée et de formaldéhyde de rapport molaire F/U compris entre 3 et 6 en présence d'urée de manière que le rapport molaire F/U soit compris à cette première étape entre 1,8 et 3, la condensation étant conduite à une température comprise entre 40 et 100 °C, d'abord à pH neutre puis à pH acide au plus égal à 5,5 et en ce que dans une deuxième étape on ajoute la totalité du phénol et le restant de l'urée, la condensation étant conduite toujours à pH acide au plus égal à 5,5 à une température comprise entre 40 et 100 °C jusqu'à ce que la viscosité du mélange réactionnel soit comprise entre 200 et 1 200 m Pa · s à 20 °C pour une teneur en extrait sec de 52 % et en ce que dans une troisième étape, on ajoute après neutralisation à pH égal au moins à 8, toute la mélamine, le milieu réactionnel étant chauffé entre 40 et 100 °C jusqu'à ce que la viscosité du mélange réactionnel soit comprise entre 200 et 1 500 m Pa · s pour un extrait sec de 60 % à 20 °C.

2. Procédé selon la revendication 1 caractérisé en ce qu'on met en œuvre dans la première étape des solutions aqueuses de formaldéhyde.

## Claims

1. A process for producing aminoaldehyde binders containing, per mole of urea, from 0.2 to 0.8 moles of melamine, from 1.5 to 2.5 moles of formaldehyde, and from 0.05 to 0.5 mole of phenol, characterised in that in a first stage a precondensate of urea and formaldehyde with a molar ratio F/U between 3 and 6 is condensed in the presence of urea so that the molar ratio F/U at said first stage is between 1.8 and 3, the condensation being carried out at a temperature of between 40 and 100 °C, firstly at a neutral pH then at an acid pH at most equal to 5.5, and that in a second stage all the phenol and the remaining urea are added, the condensation still being carried out at an acid pH at most equal to 5.5 and at a temperature of between 40 and 100 °C, until the viscosity of the reaction mixture is between 200 and 1,200 m Pa · s at 20 °C for a dry extract content of 52 % and that in a third stage, after neutralisation to a pH of at least 8, all the melamine is added, the reaction medium being heated to between 40 and 100 °C until the viscosity of the reaction mixture is between 200 and 1,500 m Pa · s for a dry extract of 60 % at 20 °C.

2. A process according to claim 1, characterised in that in said first stage aqueous solutions of formaldehyde are used.

7

**Patentansprüche**

1. Verfahren zur Herstellung von Aminoplastbindern, die auf ein Mol Harnstoff 0,2 bis 0,8 Mol Melamin, 1,5 bis 2,5 Mol Formaldehyd und 0,05 bis 0,5 Mol Phenol enthalten, dadurch gekennzeichnet, daß man in einer ersten Stufe ein Vorkondensat von Harnstoff und Formaldehyd mit einem Formaldehyd/Harnstoff-Molverhältnis zwischen 3 und 6 in Gegenwart von Harnstoff so kondensiert, daß das Formaldehyd/Harnstoff-Molverhältnis in dieser ersten Stufe zwischen 1,8 und 3 beträgt, wobei die Kondensation bei einer Temperatur zwischen 40 und 100 °C zunächst bei neutralem pH-Wert und dann bei einem sauren pH-Wert von höchstens 5,5 durchgeführt wird, daß man in einer zweiten Stufe das gesamte Phenol und den restlichen Harnstoff zusetzt, wobei die Kondensation stets bei einem sauren pH-Wert von höchstens 5,5 und einer Temperatur zwischen 40 und 100 °C durchgeführt wird, bis die Viskosität der Reaktionsmischung bei einem Trockenextraktgehalt von 52 % zwischen 200 und 1,200 m Pa · s bei 20 °C liegt, und daß man in einer dritten Stufe nach Neutralisierung auf einen pH-Wert von mindestens 8 das gesamte Melamin zusetzt, wobei das Reaktionsmilieu auf eine Temperatur zwischen 40 und 100 °C erhitzt wird, bis die Viskosität der Reaktionsmischung bei einem Trockenextrakt von 60 % zwischen 200 und 1 500 m Pa · s bei 20 °C liegt.

2. Verfahren nach Anspruch 1, dadurch gekennzeichnet, daß man in der ersten Stufe wässrige Formaldehydlösungen einsetzt.